# FASCICULE DE BREVET EUROPEEN

(11) **EP 0 456 549 B1**
(45) Date de publication et mention de la délivrance du brevet: **03.01.1996**
(21) Numéro de dépôt: 91401115.0
(22) Date de dépôt: 26.04.1991
(51) Int. Cl.: B64D 13/08

(54) **Méthode pour le conditionnement thermique des équipements électroniques montés sur les aéronefs, et systèmes pour sa mise en oeuvre**
Verfahren zur Klimatisierung der elektronischen Einrichtungen eines Flugzeuges und Einrichtungen dafür
Method for thermally conditioning aircraft electronic equipment and systems thereof

(30) Priorité: 11.05.1990 FR 9005901
(43) Date de publication de la demande: 13.11.1991
(73) Titulaire: THOMSON-CSF, F-75008 Paris (FR)
(72) Inventeur: Grignon, Robert, F-92045 Paris la Défense (FR); Trouillot, Pascal, F-92045 Paris la Défense (FR)
(74) Mandataire: Chaverneff, Vladimir

(56) Documents cités:
- EP-A- 0 342 166
- DE-A- 3 824 468
- US-A- 2 477 931
- US-A- 2 503 250
- US-A- 2 721 456
- PATENT ABSTRACTS OF JAPAN vol. 14, no. 277 (M-985)(4220) 15 juin 1990, & JP-A- 02 85010 (NIPPON DENSO CO) 26 mars 1990,
- ENGINEERING. (INCL. MACHINE SHOP MAGAZINE) vol. 222, no. 5, mai 1982, LONDON GB pages 348 - 349; R. AXE: "TAKING THE HEAT OUT OF AVIONICS"

## Description

La présente invention a pour objet une méthode pour le conditionnement thermique des équipements montés sur les aéronefs. Elle vise en outre des systèmes pour la mise en oeuvre de cette méthode.

Sous certains aéronefs, notamment les avions militaires, sont fixés sous une structure inférieure de l'avion des nacelles renfermant des équipements électroniques. Par équipements électroniques, on entend ici tous les dispositifs, systèmes, appareils et autres renfermant au moins un composant électronique. Jusqu'à présent, on connaissait un certain nombre de dispositifs utilisés pour refroidir de l'air dynamique trop chaud au niveau de l'interface entre un aéronef et son environnement. Un de ces systèmes est constitué d'une machine thermique composée d'un compresseur en série avec un échangeur et une turbine de détente. Cet agencement est communément appelé "montage Bootstrap". Dans un tel agencement, la turbine de détente est alimentée par de l'air dont la pression est remontée par l'action d'un compresseur et dont la température est sensiblement égale à celle à la prise d'air grâce à l'action d'un échangeur. La détente à travers la turbine s'accompagne d'un refroidissement important de l'air. Si le système refroidisseur de l'échangeur est de l'air dynamique prélevé, il est clair que le système bootstrap est un agencement de refroidissement de l'air dynamique autonome, c'est-à-dire fonctionnant sur air dynamique exclusivement. Ce système présente l'inconvénient d'être volumineux, ce qui se traduit par un encombrement certain, et de présenter une masse relativement importante, ce qui n'est évidemment pas avantageux pour des aéronefs. En outre, sa réalisation présente une certaine complexité qui, conjointement avec une mise au point particulièrement difficile, se traduit par un prix de revient relativement élevé de l'ensemble.

Un objet de la présente invention est de proposer une méthode permettant d'obvier aux inconvénients mentionnés ci-dessus grâce à une possibilité de mise en oeuvre au moyen de systèmes nouveaux présentant un rapport encombrement/masse relativement réduit.

Un autre objet de l'invention est de réaliser des systèmes permettant un conditionnement thermique efficace des équipements électroniques, tout en étant d'une complexité moindre ce qui se traduit par un prix de revient nettement moins élevé.

On connaît d'après le document DE-A-3 824 468 un dispositif à trois machines tournantes et un échangeur thermique, pour produire de l'air de propulsion et de l'air de réfrigération.

La présente invention a pour objet une méthode pour le conditionnement thermique d'équipements électroniques montés sur les aéronefs, à l'aide de plusieurs machines tournantes, selon lequel on capte un courant ou flux d'air dynamique que l'on transfère à une première machine tournante, qui est une turbine permettant de conférer audit flux d'air un premier gradient négatif de température, et cette méthode est caractérisée par le fait que le flux d'air refroidi par la turbine est envoyé directement dans une enceinte renfermant les équipements électroniques, et que la deuxième machine tournante est une génératrice entraînée par la turbine qui alimente un dispositif à effet Peltier, que ce dispositif à effet Peltier refroidit une conduite dans laquelle passe le flux d'air refroidi par la turbine, et que le dispositif à effet Peltier est mis en oeuvre lorsque le gradient négatif de température dû à la turbine est insuffisant.

Selon l'invention le système de conditionnement thermique d'équipements électroniques montés sur les aéronefs, à l'aide d'une turbine entraînant une machine tournante faisant partie de moyens additionnels de production d'air relativement froid, la turbine étant reliée à une prise d'air dynamique, est caractérisé par le fait que les équipements à refroidir sont disposés dans une enceinte fermée directement reliée à la sortie d'air froid de la turbine, et que les moyens additionnels comportent une génératrice reliée à un dispositif à thermocouple à effet Peltier, et que les soudures froides du dispositif à thermocouples sont disposées sur une conduite reliant la turbine aux équipements à refroidir, et que ses soudures chaudes sont disposées sur une dérivation reliée à ladite prise d'air.

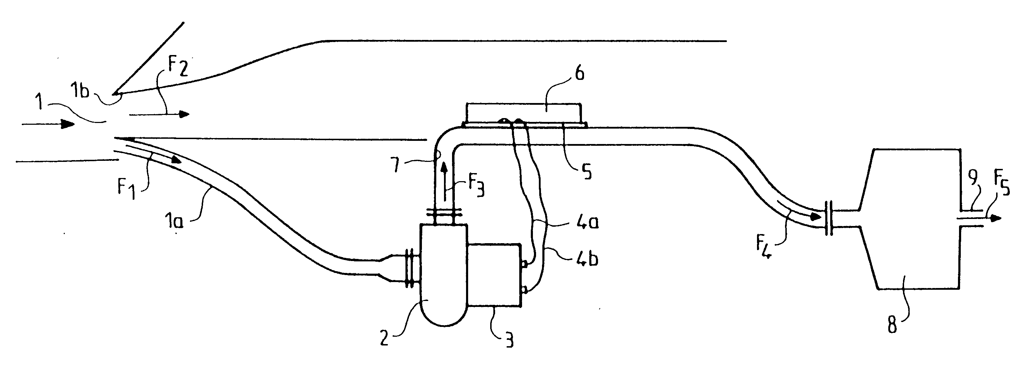

D'autres caractéristiques et avantages de l'invention apparaîtront à la lecture de la description non limitative suivante de formes et de modes de réalisation selon l'invention, en référence au dessin annexé dans lequel :

La Figure unique est une vue schématique d'une forme de réalisation permettant la mise en oeuvre de l'invention.

Sur la Figure est représenté un système de conditionnement thermique par refroidissement de l'air dynamique qui est capté par une prise d'air 1 puis immédiatement scindé en une dérivation la selon la flèche F1 et une dérivation 1b selon la flèche F2. Le courant d'air transféré par le conduit de dérivation 1a est envoyé à une turbine de détente 2 accouplée à un générateur de courant continu 3 qui alimente par des câbles conducteurs 4a, 4b un système de couples thermo-électriques 5, 6 dont les soudures froides sont rassemblées dans un élément 5 rapporté à la conduite 7 qui transfère l'air selon F3, F4 sur un équipement électronique 8 destiné à être refroidi. Une fois le refroidissement effectué, l'air est évacué selon F5 par la conduite 9 vers l'extérieur. L'air dynamique transféré par la dérivation 1b selon la flèche F2 est destiné à venir refroidir les soudures chaudes des couples thermo-électriques, incorporées dans un radiateur convecteur 6.

Le système fonctionne de la manière suivante :
Si la température de l'air à la sortie de la turbine 2 est suffisamment basse, cet air peut être utilisé directement pour refroidir le matériel 8, par exemple par convection forcée. Dans ce cas, l'énergie électrique fournie par le générateur de courant continu 3, à partir de l'énergie mécanique récupérée sur l'arbre de la turbine 2, peut être utilisée pour toute application compatible de ce type d'alimentation électrique, les calories dégagées par le système étant évacuées dans le flux d'air extérieur.

Dans le cas contraire, c'est-à-dire si le gradient négatif de température ΔT n'est pas suffisant pour atteindre une température Tₒ nécessaire pour un refroidissement correct de l'équipement électronique, il convient alors de mettre le système 5, 6 fonctionnant selon le principe de l'effet Peltier sous tension continue à partir du générateur à courant continu, par exemple une magnéto 3 via les câbles électriques 4a, 4b. Cette mise sous tension peut être commandée par un interrupteur non représenté sur le dessin, actionné après amplification, par un signal généré par une thermosonde disposée sur le conduit 7. En effet, dans les systèmes à effet Peltier, comme cela est bien connu, il se produit une différence de température entre les faces soudées opposées du couple. Lorsque le système 5, 6 est énergisé, l'élément 5 qui renferme les soudures froides confère par convection au courant dans la conduite 7 un gradient supplémentaire ΔT₂ qui vient s'ajouter au gradient négatif ΔT₁ en sortie de turbine et confère au flux d'air selon F4 un abaissement de température suffisant pour réaliser le conditionnement thermique approprié de l'équipement 8 éventuellement pourvu d'un dispositif de connexion approprié. Il est clair que l'élément 5 peut être agencé de façon que le nombre de couples à énergiser soit fonction de la température de refroidissement Tᵣ à atteindre. On peut alors envisager un pilotage par thermo-sonde de façon à pouvoir régler de façon appropriée le nombre de couples thermo-électriques à énergiser. Il est clair que de tels pilotages et régulations peuvent être réalisés par des agencements de composants électroniques disponibles dans le commerce.

Par ailleurs, il est bien évident que le système selon la Figure incorpore différents capteurs de pilotage permettant l'ouverture et la fermeture de vannes de commande de l'entrée et de la sortie des flux d'air au niveau de la turbine et de l'équipement à refroidir, respectivement.

## Revendications

1. Procédé de conditionnement thermique d'équipements électroniques montés sur les aéronefs, à l'aide de plusieurs machines tournantes, selon lequel on capte un courant ou flux d'air dynamique que l'on transfère à une première machine tournante, qui est une turbine (2) permettant de conférer audit flux d'air un premier gradient négatif de température, caractérisé par le fait que le flux d'air refroidi par la turbine est envoyé directement dans une enceinte renfermant les équipements électroniques, et que une deuxième machine tournante (3) est une génératrice entraînée par la turbine qui alimente un dispositif à effet Peltier (6), que ce dispositif à effet Peltier refroidit une conduite (7) dans laquelle passe le flux d'air refroidi par la turbine, et que le dispositif à effet Peltier est mis en oeuvre lorsque le gradient négatif de température dû à la turbine n'est pas suffisant.

2. Système de conditionnement thermique d'équipements électroniques montés sur les aéronefs, à l'aide d'une turbine (2) entraînant une machine tournante faisant partie de moyens additionnels de production d'air relativement froid, la turbine étant reliée à une prise d'air dynamique (1), caractérisé par le fait que les équipements à refroidir sont disposés dans une enceinte fermée (8) directement reliée à la sortie d'air froid de la turbine, et que les moyens additionnels comportent une génératrice (3) entraînée par la turbine et reliée à un dispositif à thermocouple (5, 6) à effet Peltier, et que les soudures froides (5) du dispositif à thermocouples sont disposées sur une conduite (7) reliant la turbine (2) aux équipements à refroidir (8), et que ses soudures chaudes (6) sont disposées sur une dérivation (1b) reliée à ladite prise d'air.

## Claims

1. Method of thermally conditioning electronic equipment mounted on aircraft, by means of several rotating machines, in which a current or flow of ram air is tapped and transferred to a first rotating machine, which is a turbine (2) enabling the said flow of air to be given a first negative temperature gradient, characterized in that the flow of air cooled by the turbine is sent directly into an enclosure containing the electronic equipment, and in that a second rotating machine (3) is a generator driven by the turbine which supplies a Peltier-effect device (6), in that this Peltier-effect device cools a pipe (7) through which the flow of air cooled by the turbine passes, and in that the Peltier-effect device is put into operation when the negative temperature gradient due to the turbine is not sufficient.

2. System for thermally conditioning electronic equipment mounted on aircraft, by means of a turbine (2) driving a rotating machine forming part of additional means of producing relatively cold air, the turbine being connected to a ram air intake (1), characterized in that the equipment to be cooled is placed in a closed enclosure (8) directly connected to the cold air outlet of the turbine, and in that the additional means include a generator (3) driven by the turbine and connected to a Peltier-effect thermocouple device (5, 6), and in that the cold junctions (5) of the thermocouple device are placed on a pipe (7) connecting the turbine (2) to the equipment (8) to be cooled, and in that its hot junctions (6) are placed on a by-pass (1b) connected to the said air intake.

## Patentansprüche

1. Verfahren zur Wärmekonditionierung von elektronischen Anlagen, die an Flugzeugen montiert sind, mit Hilfe mehrerer drehender Maschinen, wobei gemäß diesem Verfahren ein dynamischer Luftstrom angesaugt wird, der an eine erste drehende Maschine gelangt, bei der es sich um eine Turbine (2) handelt, die dem Luftstrom einen ersten negativen Temperaturgradienten verleiht, dadurch gekennzeichnet, daß der durch die Turbine gekühlte Luftstrom dann unmittelbar in einen Bereich gelangt, in dem sich die elektronischen Anlagen befinden, und daß eine zweite drehende Maschine (3) ein von der Turbine angetriebener Stromgenerator ist, welcher eine Kühlvorrichtung nach dem Peltier-Effekt (6) speist, daß diese Vorrichtung einen Kanal (7) kühlt, durch den der von der Turbine gekühlte Luftstrom strömt, und daß diese Peltier-Effekt-Vorrichtung wirksam wird, wenn der negative Temperaturkoeffizient aufgrund der Turbine nicht ausreicht.

2. Wärmekonditioniersystem für elektronische Anlagen an Flugzeugen mit Hilfe einer Turbine (2), die eine drehende Maschine antreibt, wobei diese Maschine zu zusätzlichen Mitteln zur Erzeugung relativ kühler Luft gehört und wobei die Turbine an einen Einlaß für dynamische Luft (1) angeschlossen ist, dadurch gekennzeichnet, daß die zu kühlenden Anlagen in einem geschlossenen Raum (8) untergebracht sind, der unmittelbar an den Auslaß für kühle Luft aus der Turbine angeschlossen ist, und daß die zusätzlichen Mittel einen von der Turbine angetriebenen Generator (3) enthalten, der an eine Thermoelement-Vorrichtung (5, 6) gemäß dem Peltier-Effekt angeschlossen ist, und daß die kalten Lötstellen (5) der Thermoelement-Vorrichtung auf einem Kanal (7) angeordnet sind, der die Turbine (2) mit den zu kühlenden Anlagen (8) verbindet, und daß deren heiße Lötstellen (6) auf einem Ableitungskanal (1b) angeordnet sind, der an den Lufteinlaß angeschlossen ist.
